(19) Europäisches Patentamt
European Patent Office
Office européen des brevets

(11) EP 0 987 306 B1

(12) **EUROPEAN PATENT SPECIFICATION**

(45) Date of publication and mention of the grant of the patent:
**17.11.2004 Bulletin 2004/47**

(51) Int Cl.[7]: **C08L 83/04**

(21) Application number: **99203652.5**

(22) Date of filing: **05.06.1996**

(54) **Curable silicone sealant/adhesive compositions.**

Härtbare Silicon-Klebe-/Abdichtungszusammensetzungen

Compositions adhésives/d'obturation, durcissables à base de silicone

(84) Designated Contracting States:
**AT BE CH DE DK ES FI FR GB GR IE IT LI LU MC NL PT SE**

(30) Priority: **05.06.1995 US 463173**
**07.06.1995 US 481908**

(43) Date of publication of application:
**22.03.2000 Bulletin 2000/12**

(62) Document number(s) of the earlier application(s) in accordance with Art. 76 EPC:
**96918102.3 / 0 777 697**

(73) Proprietor: **HENKEL CORPORATION**
**Gulph Mills, Pennsylvania 19406 (US)**

(72) Inventors:
- **Chu, Hsien-Kun**
  **Wethersfield, CT 06109 (US)**
- **Rich, Richard D.**
  **Avon, CT 06001 (US)**
- **Crossan, David I.**
  **Hebron, CT 06428 (US)**
- **Cross, Robert P.**
  **Rocky Hill, CT 06067 (US)**
- **Newberth, Frederick, F., II**
  **West Hartford, CT 06107 (US)**
- **Salamon, Peter A.**
  **Hebron, CT 06248 (US)**

(74) Representative: **Marchant, James Ian et al**
**Elkington and Fife LLP,**
**Prospect House,**
**8 Pembroke Road**
**Sevenoaks, Kent TN13 1XR (GB)**

(56) References cited:

| | |
|---|---|
| **EP-A- 0 288 869** | **EP-A- 0 651 022** |
| **US-A- 3 697 473** | **US-A- 3 957 717** |
| **US-A- 5 096 990** | **US-A- 5 340 777** |

- **DATABASE WPI Section Ch, Week 199305 Derwent Publications Ltd., London, GB; Class A26, AN 1993-042628 XP002129275 & JP 04 370151 A (SHINETSU CHEM IND CO LTD), 22 December 1992 (1992-12-22)**
- **PATENT ABSTRACTS OF JAPAN vol. 016, no. 048 (E-1163), 6 February 1992 (1992-02-06) & JP 03 252115 A (NISSIN ELECTRIC CO LTD), 11 November 1991 (1991-11-11)**
- **DATABASE WPI Section Ch, Week 199419 Derwent Publications Ltd., London, GB; Class A26, AN 1994-156805 XP002129276 & JP 06 100782 A (TOSHIBA SILICONE KK), 12 April 1994 (1994-04-12)**

EP 0 987 306 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

This invention relates to polyorganosiloxane (silicone) sealant/adhesive compositions, including silicone compositions which cure in the absence of oxygen, as well as heat-curable silicone compositions. More specifically, the invention variously relates to low viscosity, reactive silicone sealants useful for sealing porosity in plastics, metals and other porous materials, and having superior physical properties, e.g., fixation and curing times, strength, thermal stability and chemical resistance properties.

This application is a divisional application divided from European patent application no. 96918102.3.

### Description of Related Art

Anaerobically curing sealant compositions of various types are old and well-established in the art. The earliest compositions were based on polyalkylene ether polymerizable monomers and organic (meth)acrylate polymerizable monomers. Such compositions typically show poor thermal stability properties.

Due to their excellent thermal stability, silicones have been used for many sealant, adhesive and coating applications. However, because such materials contain large amounts of dissolved oxygen and are highly permeable to oxygen, it was generally believed that silicones would not be anaerobically curable.

Various silicone compositions nonetheless have been disclosed which are said to be anaerobically curable, but these compositions are all characterizable by deficiencies which have limited their commercial utility and acceptance.

U.S. Patent No. 4,035,355 to Baney et al. teaches anaerobically curing sealant compositions including acrylate-containing polyorganosiloxanes and a hydroperoxy polymerization initiator. The Baney compositions are however, disadvantageous due to their relatively long cure time, which is on the order of approximately 24 hours.

U.S. Patent No. 5,391,593 to Inoue et al. is directed to a silicone rubber sealant composition comprising an organopolysiloxane, an organic peroxide and carbon black. This composition is said to cure under anaerobic conditions to yield a silicone rubber having improved physical properties. Such silicones, however, do not fully cure until about 2 to 3 days after removal of oxygen.

Japanese Kokai JP 04268315 to Toshiba Silicone Co, Ltd. is directed to an anaerobically and ultraviolet curable polyorganosiloxane composition for adhesive purposes that is reported as having good heat resistance. This composition is said to show adhesion after 2 hours.

It would be a significant advance in the art to provide an anaerobically curing silicone composition that cures in a short period of time without sacrificing heat stability and strength properties of the cured resin.

Impregnation sealing of microporosity is a commonly used methodology in the art of forming a variety of articles, structural components, and assemblies, as for example castings, die castings, electronic components, powder metal parts, fiber-reinforced resin composites and other materials which exhibit porosity.

Originally, materials, manufacturing techniques, and casting designs were specified to minimize the occurrence of porosity in formed objects, based on the hypothesis that microporosity was structurally and functionally undesirable and its occurrence in formed articles embodied poor manufacturing technique. This approach severely limited design freedom, and resulted in significant rejection of parts exhibiting any substantial porosity characteristics.

This design strategy changed in the 1970s as a result of the energy crisis, which resulted in a major switch to lighter metals for structural applications. During this period many iron parts were changed to cast aluminum components, and many other parts were designed as die castings. This switch to lighter metals resulted in weight savings in many applications where energy consumption and power optimization were important, but created a new and persistent problem of microporosity in the light metal formed parts. The occurrence of microporosity was found to be particularly acute in components formed from metal powder, and to present a significant obstacle to commercial utility, particularly when such porous parts were employed in fluid power systems and other liquid handling applications.

In order to overcome the deficiencies attendant the presence of microporosity in formed articles of the above-described types, impregnation sealing technology was developed, by which the porosity of the porous parts was impregnated with a sealant composition. Upon curing of the impregnated sealant, the resulting sealed part is suitable for use in fluid exposure applications, as well as facilitating plating, coating, and further processing of the formed article.

Among the impregnation sealing compositions which have been developed to date are self-curing anaerobic sealants and thermal curing sealants, as well as sealants which cure by both anaerobic and heat cure mechanisms.

Electronic encapsulating sealant/coating compositions, curable both anaerobically and with exposure to UV light, have also been developed for vacuum impregnation of electrical components such as transformers, wherein the encapsulating sealant is anaerobically cured inside the device and is cured on the outside surface with UV light to encapsulate the device. To effect a thorough outer surface curing of the sealant, such compositions typically contain

a UV photoinitiator in concentrations substantially in excess of 5% by weight based on the weight of the curable component thereof.

In addition, sealant/coating compositions have been developed for sealing of laminates, composite materials, and the like, containing macroscopic or gross voids into which the sealant/coating composition after surface application flows by capillary, or wicking action. Generally, sealant/coating compositions employed in such applications are highly viscous in character, having a viscosity substantially greater than 1000 centipoise, as measured by the Cannon-Fenske viscosity determination method.

One such conventional formulation, having a Cannon-Fenske viscosity of 4200 centipoise, contains 3.4 weight percent of a UV photoinitiator, based on the weight of curable component in the sealant/coating composition, to effect surface cure of the composition under UV radiation, in combination with internal anaerobic curing of the composition. The high viscosities of such compositions generally require long processing times for impregnation of microporosity.

Previously developed impregnating compositions for sealing porous parts include the compositions disclosed in the patents identified and discussed below.

U.S. Patent No. 3,672,942 to Neumann discloses an anaerobic impregnant comprising a free-radical polymerizable acrylate ester monomer and free-radical polymerization initiator therefor, e.g., a hydroperoxide. The patent discloses utilizing an accelerator in the impregnant, such as aldehyde-amine condensation products, sulfur-containing free-radical accelerators, or organic compounds containing an oxidizable transition metal. This reference also discloses a vacuum impregnation process in which the porous article is placed in a vacuum vessel, followed by drawing of vacuum therein and covering the article with the disclosed anaerobic sealant so that upon release of vacuum, the sealant is forced into the evacuated porosity of the article. The surface of the impregnated article then is treated with the aforementioned polymerization accelerator to cure the sealant at the outer surface of the porous article.

U.S. Patent No. 3,969,552 describes an impregnation composition comprising an acrylic anaerobic curing resin and a peroxy initiator therefor. The wash solution is an aqueous solution of a surfactant of specified formula. The patent further discloses that the aqueous surfactant solution may contain an accelerator to effect polymerization of the anaerobic sealant in the surface areas of the impregnated part being washed.

U.S. Patent No. Re. 32,240 to DeMarco describes a self-emulsifying anaerobic composition for porosity impregnation applications, comprising an anaerobically curing monomer such as an acrylic ester, a peroxy initiator therefore, e.g., a hydroperoxide or perester, an anionic or nonionic surfactant which is dissolved in the composition and renders it self-emulsifying upon mixing with water, and optionally an accelerator for the anaerobic polymerization, e. g, a sulfimide.

U.S. Patent No. 4,632,945 to Garcia, et al, discloses an anaerobic sealant material comprising a (meth)acrylate monomer, a hydroperoxide or perester initiator, an accelerator having $-SO_2NCO-$ functionality, and a transition metal co-accelerator comprising a source of copper iron and an iron salt or ferrocenyl compound.

The above-described anaerobic sealant compositions are typically impregnated in the porosity of porous metal parts by wet vacuum impregnation, wet vacuum/pressure impregnation, or dry vacuum/pressure impregnation.

EP-A-0288869 discloses a water block composition comprises:

(A) an Si-H endblocked polydiorganosiloxane fluid having a viscosity of 0.5 to about 100 cs. at 25°C. and represented by the formula $H(R'_2SiO)_x(R'_2Si)H$ wherein R' is independently selected from alkyl radicals having from 1 to 6 carbon atoms or the phenyl radical and the average value of x is 1 to 40;

(B) a polydiorganosiloxane fluid having a viscosity of 0.5 to about 100 cs. at 25°C. and represented by the formula

$$G-(\underset{R''}{\overset{R''}{Si}}O)_y-\underset{R''}{\overset{R''}{Si}}-G$$

wherein G denotes unsaturated radicals independently selected from the vinyl group or higher alkenyl radicals represented by the formula $-R'''(CH_2)_mCH=CH_2$, in which R''' denotes $-(CH_2)_p$ or $-(CH_2)_qCH=CH-$, m is 1, 2, or 3, p is 3 or 6 and q is 3, 4 or 5, R''' is independently selected from an alkyl radical having 1 to 6 carbon atoms or a phenyl radical and y is on the average from 1 to about 40;

(C) a siloxane crosslinker selected from short chain linear or cyclic siloxanes containing SiH functionality or Si-G functionality, in which G has the above-defined meaning;

(D) sufficient hydrosilation catalyst to cure the mixture of (A), (B), and (C); and

(E) sufficient polymerization inhibitor to prevent the water block composition from curing to a non-flowing state before the cable is filled with the combination of (A), (B), (C), (D) and (E).

US Patent No. 3,697,473 discloses a composition contains a polydiorganosilxane having two vinyl radicals, a mixture of silicon compounds having silicon-bonded hydrogen atoms where one organosiloxane compound has two silicon-bonded hydrogen atoms and the other organosiloxane compound has three to ten silicon bonded hydrogen atoms. The composition is cured by a platinum catalyst and has elastomeric properties.

US Patent No. 3,957,717 discloses organopolysiloxane compositions comprising cyclic diorganosiloxane polymers containing at least two silicon-bonded unsaturated hydrocarbon groups per molecule, organopolysiloxanes composed of the triorganosiloxy and $SiO_2$ groups, and organohydrogenpolysiloxanes containing at least two silicon-bonded hydrogen atoms per molecule, including platinum catalysts, and fillers are disclosed. The compositions are suitable for various fields of applications including encapsulation of electronic parts.

EP-A-0,651,022 discloses a curable organosiloxane composition comprising:

(A) a first liquid polyorganosiloxane comprising terminal siloxane units of the formula $R^1R^2{}_2SiO_{1/2}$ and non-terminal organosiloxane units of the formula $R^3{}_2SiO$, having a viscosity at 25°C. of 0.1 to 10 Pa·s;

(B) an amount sufficient to impart toughness to cured articles prepared from said composition of a chain extender selected from disiloxanes of the formula $(R^4HSi)_2O$ and liquid diorganohydrogensiloxy-terminated polydiorganosiloxanes wherein the terminal units are of the formula $HR^4{}_2SiO_{1/2}$ and the non-terminal organosiloxane units are of the formula $R^5{}_2SiO$ where $R^1$ represents an alkenyl radical and $R^2$, $R^3$, $R^4$ and $R^5$ are individually selected from unsubstituted or substituted monovalent hydrocarbon radicals that are free of ethylenic unsaturation, said chain extender having a viscosity of 0.001 to 1.0 Pa·s;

(C) an amount sufficient to cure said composition of a cross-linking agent having a viscosity of 0.1 to 10 Pa·s at 25°C., comprising a second polyorganosiloxane containing an average of at least three silicon-bonded hydrogen atoms or alkenyl radicals per molecule, where the remaining silicon-bonded organic groups are monovalent hydrocarbon radicals selected from the same group as $R^2$; and

(D) from 0.1 to 500 parts by weight of platinum group metal, per one million parts of ingredients A and B of a hydrosilation catalyst to promote curing of said composition,

wherein the number of silicon-bonded hydrogen atoms present in said chain extender constitute at least 80 percent of the total number of silicon-bonded hydrogen atoms and alkenyl radicals present in the combination of said chain extender and said cross-linking agent and the molar ratio of silicon-bonded hydrogen atoms in said chain extender to alkenyl radicals present in said first polyorganosiloxane is from 0.8 to 1.2.

Japanese Patent Application No. 04370151 discloses a silicone composition comprising (A) a vinyl containing polysiloxane having at least two $CH_2$=CH-Si bonds per molecule, (B) an organohydrogen polysiloxane having at least two hydrogens directly bonded to the silicon atom in one molecule, and (C) platinum or a platinum compound. The composition has a viscosity of between 10 to 400 cS at 25°C.

Japanese Patent Application No. 06100782 discloses a composition comprising (A) a polyorganosiloxane which contains two or less Si-linked alkenyl groups on average in the molecule, (B) a polyorganosiloxane which contains two or less Si-linked hydrogen atoms on average in the molecule and (C) a catalytic amount of a platinum compound.

Japanese Patent Application No. 02050337 discloses a capacitor element housed in a vessel which has a silicone resin injected into the vessel and impregnating the capacitor element with the silicone resin and exposing the capacitor element to conditions to promote the cure of the silicone resin. The silicone resin is an addition reaction type organopolysiloxane having a vinyl group and consisting of a liquified substance having a viscosity of 500 cp.

All of these and other known reactive sealant compositions are either polyester- or organic (meth)acrylate monomer-based. As a consequence, presently available reactive sealant compositions are severely limited in that they have thermal resistance up to around 177°C (350°F). After such temperature is reached the cured resin decomposes and resultingly shrinks away from within the interior of the pores or reduces in weight thereby breaking the seal. Additionally, such prior art sealant compositions if not fully cured within the porosity of parts and components used in electronics, can be somewhat conductive and therefore interfere with electrical properties of the parts.

Hence, it would be a significant advance in the art to provide a sealant composition having improved thermal and chemical resistance and which is non-conductive, even when not fully cured, thereby not interfering with electrical properties of impregnated electronic parts.

## SUMMARY OF THE INVENTION

The invention variously relates to low viscosity, reactive silicone sealant/adhesive compositions, useful, *inter alia*, for sealing porosity in plastics, metals and other porous materials. Such compositions are characterized by superior physical properties, e.g., fixation and curing times, strength, thermal stability and chemical resistance properties.

In a broad aspect, the invention relates to a curable silicone sealant composition, comprising a first silicon-containing material, and a second silicon-containing material reactive or reacted with the first silicon-containing material,

Selected from a reactive mixture of the first and second silicon-containing materials, said reactive mixture having a viscosity in the range of 0.001 Pa·s to 0.1 Pa·s (1 to 100 cp), wherein the first monomeric silane includes at least two SiH functionalities and has a molecular weight less than 2000, and the second silicon-containing material includes at least two ethylenically unsaturated functionalities and has a molecular weight less than 2000, with a ratio of SiH to Si-ethylenically unsaturated functionalities of from 0.8 to 1.2, and said reactive mixture is present in said composition with a platinum catalyst effective for catalyzing reaction of the first and second silicon-containing materials with one another, and wherein the viscosity is measured at room temperature (25°C) by a Brookfield Viscometer, and the molecular weight are measured at room temperature (25°C) by gel permeation chromatography.

The silicone compositions preferably are heat cured under suitable elevated temperature conditions, with the choice of the heat cure temperature conditions being readily determinable by measurement of physical and/or performance properties of such compositions cured at different selected temperature curing conditions.

The silicone compositions provide a reactive, i.e., vulcanizable, sealant composition having high temperature and chemical resistance, which will not interfere with electrical properties of impregnated electronic parts.

Silicone sealant compositions of the present invention may be formulated and employed to readily penetrate and fill voids in porous materials. For example, by using a vacuum process, air may be removed from the porosity of porous parts to be impregnated, and replaced with the reactive silicone. The silicone sealant may then be cured by anaerobic and/or heating conditions, depending on the specific composition of the impregnant medium, to yield a cured and sealingly effective composition in the porosity of the impregnated part.

As used herein, low viscosity refers to a viscosity that is low enough to permit the silicone composition to enter into the pores of an article having porosity to be impregnated. Typically, such viscosity is from 0.001 to 1 Pa·s (1 to 1000 centipoise), but viscosities outside of this range may be used when appropriate.

All viscosities reported herein are measured at room temperature (25°C) by a Brookfield Viscometer and all molecular weights referred to herein are measured at room temperature by gel permeation chromatography unless otherwise stated.

Other aspects, features and embodiments of the invention will be more fully apparent from the ensuing disclosure.

## BRIEF DESCRIPTION OF THE DRAWINGS

Figure 1 is a schematic illustration of a process system according to one embodiment of the present invention for impregnating porosity of porous articles.

Figure 2 is a graph of the weight of an impregnation sealant composition according to the present invention as a function of elevated temperature exposure over time.

Figure 3 is a graph of the weight of a known impregnation sealant as a function of elevated temperature exposure over time.

Figure 4 is a three-dimensional graph wherein the weight loss of an impregnation sealant composition according to the present invention is compared to the weight loss of other impregnation sealants as a function of elevated temperature over time.

## DETAILED DESCRIPTION OF THE INVENTION AND PREFERRED MODES OF CARRYING OUT THE SAME

The silicone compositions of the invention comprise a reactive mixture of first and second silicon-containing materials, wherein the first silicon-containing material includes at least two SiH functionalities and has a molecular weight less than 2000, and the second silicon-containing material includes at least two ethylenically unsaturated functionalities and has a molecular weight less than 2000. The ratio of SiH to Si-ethylenically unsaturated functionalities in such composition is from 0.8 to 1.2. A platinum catalyst effective for catalyzing reaction of the first and second silicon-containing materials with one another is employed in the composition.

The present invention in relation to the silicone compositions is based on the unexpected discovery that by using relatively low molecular weight, (i.e., less than 2000 molecular weight) starting materials, reactive heat-curable silicone compositions can be produced for use in impregnation processes for impregnating the porosity of porous articles. Surprisingly, such compositions have high thermal resistance even when cured inside the porosity of a porous article. Such impregnation sealant compositions comprising vulcanizable silicones have heretofore been unknown.

The present invention is directed to an impregnation sealant composition comprising a low viscosity vulcanizable silicone. Such viscosity is typically from 0.001 to 0.1 Pa·s (1 to 100 centipoise) as measured at room temperature.

The vulcanizable silicone sealant compositions according to the present invention may optionally contain, as needed, polymerization inhibitors and other stabilization additives as well as any other silicone composition additives generally known in the art. Examples of inhibitors useful in the present compositions include, but are not limited to, 2-methyl-3-butyn-ol and 2-methyl-3-hexyn-ol.

In compositions according to the present invention when the low viscosity vulcanizable silicone is a heat-curable silicone composition, at least one of the first and second silicon-containing materials has a molecular weight that is less than 1000.

In such heat-curable silicone compositions according to the present invention, examples of the first silicon containing material include, but are not limited to, monomeric silanes having SiH functionality located at either the ends or the middle of the chains. Preferably, the first silicon-containing material is tetrakisdimethylsilylsilane.

Typical examples of the second silicon-containing material include, but are not limited to, polyorganosiloxane containing ethylenically unsaturated functionalities and monomeric silanes containing ethylenically unsaturated functionalities. Preferably, the second silicon containing material is vinyl-terminated polydimethylsiloxane, tetramethyl tetravinyl cylcotetrasilane or tetrakis(vinyl dimethylsilyl)silane.

In another aspect, the present invention is directed to an impregnation process for sealing porosity in porous articles. The process comprises placing the porous article in an impregnation chamber and applying vacuum to the impregnation chamber to evacuate the porosity of the article therein. The porous article then may be contacted at higher-than-vacuum pressure with an impregnation sealant composition comprising the low viscosity vulcanizable silicone. Penetration of the impregnant composition into the porosity of the article thereby takes place. The composition then may be cured within the pores of the article to seal the porosity.

In such porosity impregnation process, the penetration of the composition into the porosity of the article may optionally be assisted by pressurizing the impregnation chamber.

Typical processes employing silicone compositions of the invention are briefly described below with reference to impregnation of porous parts contained in a basket which is introduced into the impregnation chamber, which is the typical method of parts containment if the parts are of suitably small size; in the case of larger parts, the same are typically mounted on or suspended from hoist or other carrier means which is successively translated through the process system including the impregnation chamber.

In the wet vacuum impregnation process, the basket of porous parts is submerged into a vacuum tank of sealant. A short-term, e.g., 10-12 minute, vacuum cycle removes air from the porosity of the parts. The chamber then is returned to ambient pressure, with sealant penetrating into the evacuated porosity. The basket of parts then may be spun briefly in the vacuum tank to allow centrifugal force to eliminate excess sealant waste.

The wet vacuum/pressure impregnation process is similarly conducted, but with the impregnation chamber being pressurized at the end of the vacuum cycle to drive sealant further into small porosity passages.

In the dry vacuum/pressure impregnation method, the basket of porous parts is placed directly in the dry vacuum chamber. Air is evacuated from the porosity in the parts for a selected length of time, e.g., 10 minutes. A transfer valve then is open, allowing sealant to enter the vacuum chamber from a storage reservoir. The chamber is automatically pressurized to force sealant into the parts. After impregnation, while the sealant is being returned to the reservoir, a centrifuge operation spins the basket to remove excess surface sealant.

Among the foregoing methods, wet vacuum impregnation techniques are generally more widely employed than the dry vacuum/pressure impregnation process, however, either process is suitable for use in the present invention.

Following the initial impregnation step, the impregnated parts are optionally transferred to an agitated water rinse zone, for removal of any remaining surface sealant or sealant trapped in blind holes of the impregnated parts. The agitation of the water rinse zone may be effected by movement of the basket or suspended parts in such zone and/or mechanical means for effecting circulation of water therein. In the case of small porous parts contained in a basket, it frequently is desirable to operate the water rinse zone in a "tumbling basket" mode to enhance the washing operation and prevent parts with surface sealant deposits which are in contact with one another from sticking together, as a result of polymerization of the contiguous surface sealant deposits.

Thereafter, the impregnated parts may be transferred to a final rinse zone. This final rinse solution may be at elevated temperature, e.g., on the order of about 66°C (150°F) or higher, to warm the impregnated parts for quick drying, and to accelerate curing of the impregnant within the interior porosity of the article, the rate of such cure increasing with increasing temperature. Alternatively, curing may be done at this juncture by the application of hot air.

The final rinse step may also incorporate in the rinse solution suitable rust inhibitor material, for application of a rust inhibiting film to the impregnated article.

In the case of anaerobically curing impregnant compositions in accordance with the invention, the silicone impregnant composition cures in situ in the pores of the article, but as mentioned, such anaerobic curing may be enhanced by the use of hot rinse or other elevated temperature conditions.

In use, the impregnation compositions of the present invention may be conventionally employed in an impregnation chamber of typical construction, wherein a "wet" or "dry" vacuum is imposed on the porous parts to be impregnated and the evacuated porous parts contact the impregnation composition at higher, e.g. ambient pressure, whereby the impregnant composition passes into the porosity of the porous parts to effect impregnation thereof. It may be suitable in some instances to add catalyst or accelerator species to the impregnation composition.

Referring now to Figure 1, there is shown a schematic depiction of a process system for "dry" vacuum impregnation of porosity of porous articles. While the invention is shown with respect to "dry" vacuum arrangement it will be recognized that this description is for illustrative purpose only and that the impregnation compositions of the invention are equally amenable to use in process systems including "wet" or "dry" vacuum impregnation of porous parts, the choice of "wet" or "dry" vacuum impregnation depending on the composition and porous character of the porous parts, and their intended end use application.

The porous part impregnation system in this illustrative embodiment comprises an impregnation chamber 10 having an interior volume 12 in which is disposed basket 14 containing porous metal parts (not shown).

The impregnation chamber 10 is joined in flow communication via conduit 16 with a vacuum 18, for selectively applying a vacuum to the impregnation chamber so that the air therein is withdrawn to evacuate the porosity of the porous parts in the basket.

Subsequent to evacuation of interior volume 12 of the impregnation chamber 10, impregnation sealing composition according to the present invention, as stored in reservoir 20 and maintained therein at higher pressure than the evacuated chamber, is flowed in line 22 into the interior volume of the impregnation chamber. The vacuum conditions applied by vacuum 18 are discontinued once the impregnation composition fills the impregnation chamber to the desired extent.

As a result, the impregnation sealant composition penetrates into the porosity of the porous parts in basket 14. Such hydrostatic impregnation may be further assisted by reversing the vacuum 18 to pressurize the interior volume 12 of the impregnation chamber 10, to force the impregnation composition further into small porosity passages of the part to be impregnated.

The compositions of the present invention can be prepared and used immediately, if desired, or the compositions can be prepared and stored for long periods of time prior to their intended use. It is only necessary to maintain contact between such compositions and oxygen in a well known manner and to avoid the presence of even small amounts of active metals, to prevent the storable compositions from curing.

When the compositions of this invention are brought into contact with an activating surface such as an active metal surface, and oxygen is not allowed to contact the composition, such as when the compositions are applied to threads of a steel bolt and/or nut and the nut is threaded onto the bolt, a relatively rapid curing reaction takes place whereupon the composition is polymerized to an insoluble solid.

When used as an impregnant, the composition of the invention is forced into the porosity of the article to be sealed, typically through the imposition of a pressure differential, which may for example involve evacuation of the porosity followed by contacting of the impregnant composition with the article so that the composition permeates into the porosity, or by any other conventional techniques (e.g., so-called "wet vacuum," "dry vacuum/pressure," and "wet vacuum/pressure" processes, etc.) known in the art for such impregnation.

When utilized as impregnation compositions for impregnation of porosity, the silicone compositions of the invention are desirably formulated to have a viscosity suitable for such application. The viscosity for impregnation applications may be achieved by appropriate choice of compositional components of the impregnation formulation, e. g., low molecular weight species, which may for example include viscosity-adjusting ingredients, as will be apparent to those skilled in the art. For example, the composition may be formulated to provide a viscosity in the range of from 0.01 to 1 Pa·s (1 to 1000 centipoise), or other suitable viscosity characteristics, as measured at room temperature by Brookfield viscometer.

The compositions of the invention cure to solid materials which are insoluble in common organic solvents and are characterized by improved thermal stability and decreased fixation time, relative to anaerobically curing compositions that are based on only polymerizable organic monomers, and those anaerobically curing compositions based on known anaerobically curing silicone compositions. Simple thermogravimetric analysis and a nitrogen atmosphere can be used to evaluate the thermal stability of the composition. The temperature at which rapid weight loss begins is noted and is designated the upper limit temperature for the composition. The upper limit temperature is an indication of the lowest temperature at which the composition will have no useful life because of thermal degradation of the composition.

The efficacy of the compositions of this invention as anaerobically curing sealant compositions may be readily determined by the prevailing torque test. In this test several drops of the composition to be tested are placed on the threads of a metal bolt and/or nut, the nut is threaded on to the bolt and the resulting assembly of nut, bolt and composition is kept at room temperature for a period of time while the composition between the bolt and nut cures. At the end of a specified length of time the torque required to produce relative motion between the nut and bolt of an assembly is noted at 90°, 180°, 270°, and 360° of rotation. The prevailing torque for the assembly is the average of the four

torques measurements so taken.

The compositions of this invention are useful in a method for sealing the small volumes between two or more surfaces, at least one surface of which is an activating surface such as an active metal such as the volume between the two mating portions of surfaces brought into close proximity. Examples of an activating surface include the surface of an inactive material such as glass, cadmium, titanium and zinc, or the surface of an inhibiting surface such as certain anodized surfaces, oxide finishes and chromate finishes having deposited thereon an active metal or any of the activating priming compositions that are well-known in the anaerobic sealing art. Examples of two mating surfaces brought into close proximity in addition to the aforementioned nut and bolt assembly, include a concentric arrangement of parts such as a cylinder placed in a tube having an inside diameter slightly larger than the diameter of the cylinder or a parallel arrangement of parts such as one flat surface pressed onto another flat surface. Other examples will be readily apparent to one skilled in the art.

The composition can be applied to and in contact with the surfaces by any suitable means such as spreading or dipping, with the surfaces to be bonded or sealed then being brought into close proximity with one another. Any solvent which may be present should be allowed to evaporate before the surfaces are brought into close proximity.

Alternatively, when the composition possesses sufficient fluidity, the surfaces to be sealed can be brought into close proximity with one another and the composition subsequently applied, e.g., by capillary action, into the small volume between and in contact with the surface. The composition, if positioned and enclosed by the surface in such manner as to be effectively excluded from oxygen, cures to an insoluble solid form and adheres to the surface to yield an assembly with two or more surfaces held in a fixed relative configuration.

The following non-limiting examples more fully illustrate the various aspects and features of the present invention.

## Example 1

A base anaerobic impregnation composition was made for comparison purposes, having the formulation set out in Table I.

TABLE I

| Component | Concentration wt% |
|---|---|
| Triethylene Glycol Dimethacrylate | 74.00 |
| Lauryl Methacylate | 15.00 |
| Hydroxypropylmethacrylate | 5.00 |
| Bis(nonylphenoxypoly(ethleneoxyethyl)fumarate (surfactant) | 5.24 |
| Fluoresence | 0.02 |
| Quinones | 0.04 |
| Saccharin | 0.30 |
| Peroxide | 0.40 |
| Total | 100.00 |

A sample of this composition was cured in a cylindrical shape.

## Example 2

A sample solution was made up of 97.5% by weight of the above-described impregnation composition, 2.0% by weight 1-Benzoyl Cyclohexanol and 0.5% by weight 2,2-dimethoxy-2-phenyl acetophenone. Approximately 2-4 grams of the sample was placed in an aluminum dish, in which the liquid depth was 3.2 mm (⅛ inch).

A UV light source L/C chamber with a 304.8 mm (12 inch) lamp set at 300 watts per inch was employed as an actinic radiation exposure source for curing the sample.

## Example 3 (for reference only)

A sample solution was made up by mixing together 409 g of a copolymer of polydimethylsiloxane and polymonomethyl siloxane 4.5 mmole Si-H/gram, 91 g of 1,3,5,7-tetremethyl-1,3,5,7-tetravinyl-cyclotetrasiloxane, 1.5 g of 2-methyl-3-butyne-2-ol, 0.060g of fluorescent dye and 0.625g of a platinum-1,3,5,7-tetramethyl-1,3,5,7-tetravinyl-polydimethylsiloxane complex. The combined viscosity of the hydride terminated polydimethylsiloxane and 1,3,5,7-tetramethyl-1,3,5,7-tetravinyl-cyclotetrasiloxane was less than 0.5 Pa·s (500 centipoise).

Approximately 2-4 grams of the sample was placed in a plated aluminum dish, in which the liquid depth was 3.2 mm (1/8 inch). The dish was placed in a 150°C oven for ten minutes and then let sit on laboratory bench for approximately 24 hours after which it cured.

## Example 4

A sample solution was made up by reacting together 500 g of 60 centistoke silanol-terminated polydimethyl siloxane, 153 g of methyl trimethoxy silane and 0.21 g of butyl lithium. To resulting material was further added 0.5% titanium tetra isopropoxide and fluorescent dye.

Approximately 2-4 grams of the sample was placed in a plated aluminum dish, in which the liquid depth was 3.2 mm (1/8 inch). The dish was left sitting on the laboratory bench in open air for 3 days after which it cured.

## Example 5 (for reference only)

A sample solution was made up by mixing together 34.47 grams of tetravinyltetramethylcylcotetrasiloxane, 24.05g of tetramethyltetrahydrocyclotetrasiloxane, 0.1756 g 3-methyl-2-butyn-2-ol, 0.0732 g platinum catalyst and 0.0117 fluorescing agent.

Approximately 2-4 grams of the sample was placed in a plated aluminum dish, in which the liquid depth was 3.2 mm (1/8 inch). The dish was placed in a 150°C oven for approximately ten minutes and then let sit on the laboratory bench for approximately 24 hours after which it cured to a glass-like solid.

## Example 6

Three samples each of the cured samples obtained in Examples 1-4 above, were weighed and their initial weight recorded and then placed in three separate ovens (149° C, 206° C and 260° C) and weights were recorded at intervals over a period of four weeks.

Figure 4 is a three dimensional graph showing a comparison of the weight loss observed in the cured samples obtained in Example 1 (A), Example 2 (B), Example 3 (C) and Example 4 (D) as a function of three separate temperatures over the four week time period, i.e., (149° C, 206° C and 260° C).

Using thermogravimetric analysis, the weight of the cured sample obtained in Example 5 was measured and then plotted as a function of increase in temperature by 20° C per minute (50° C to 700° C) over time in Figure 2.

Using thermogravimetric analysis, the weight of the cured sample obtained in Example 1 was measured and then plotted as a function of increase in temperature by 5° C per minute (50° C-600° C) over time in Figure 3.

The silicone compositions of the present invention have utility as sealants for the sealing/bonding of a wide variety of substrate materials and physical structures.

The composition may for example be used in sealing porosity of porous parts, for threadlocking of mechanical fasteners, for sealing void spaces or interstices between contiguous or otherwise proximate structures, or as an adhesive medium for bonding of various physical objects and materials.

## Claims

1. A curable silicone sealant composition, comprising a first silicon-containing material, and a second silicon-containing material reactive or reacted with the first silicon-containing material,
   selected from a reactive mixture of the first and second silicon-containing materials, said reactive mixture having a viscosity in the range of 0.001 to 0.1 Pa·s (1 to 100 centipoise), wherein the first silicon-containing material is a silane which includes at least two SiH functionalities and has a molecular weight greater than zero and less than 2000, and the second silicon-containing material includes at least two ethylenically unsaturated functionalities and has a molecular weight greater than zero and less than 2000, with a ratio of SiH to Si-ethylenically unsaturated functionalities of from 0.8 to 1.2, and said reactive mixture is present in said composition with a platinum catalyst effective for catalyzing reaction of the first and second silicon-containing materials with one another, and
   wherein the viscosity is measured at room temperature (25°C) by a Brookfield Viscometer, and the molecular weights are measured at room temperature (25°C) by gel permeation chromatography.

2. A curable silicone sealant composition according to claim 1, which is a heat curable composition.

3. A method of impregnating porosity of a porous article, comprising:

(A) contacting the porosity of the porous article with the curable silicone sealant composition of claim 1 under pressure conditions mediating ingress of the silicone sealant composition into the porosity.

4. A curable silicone sealant composition according to claim 1, wherein the first silicon-containing material is tetrakis (dimethylsilyl)silane.

5. A curable silicone sealant composition according to claim 1, wherein the second silicon-containing material is selected from the group consisting of polyorganosiloxane containing ethylenically unsaturated functionalities and monomeric silanes containing ethylenically unsaturated functionalities.

6. A curable silicone sealant composition according to claim 1, wherein the second silicon-containing material is vinyl-terminated polydimethylsiloxane.

7. A curable silicone sealant composition according to claim 1, wherein the second silicon-containing material is tetramethyl tetravinyl cyclotetrasilane.

8. A curable silicone sealant composition according to claim 1, wherein the second silicon-containing material is tetrakis(vinyl dimethylsilyl)silane.

9. A curable silicone sealant composition according to claim 1, which consists essentially of the platinum catalyst and the first and second silicon-containing materials.

10. The curable silicone sealant composition of claim 1, cured in porosity of a porous article to impregnatingly seal said porosity.

11. A porous article having porosity thereof sealed with a curable silicone sealant composition according to claim 1, which has been impregnated and cured in said porosity.

12. An impregnation process for sealing porosity of a porous article, comprising the steps of:

placing the article in an impregnation chamber;
applying a vacuum to the impregnation chamber to evacuate the porosity of the porous article therein;
contacting the porous article at higher-than-vacuum pressure with the curable silicone sealant composition of claim 1 for penetrating said silicone sealant composition into the porosity of the porous article.

13. The process according to claim 12, wherein said penetration is assisted by pressurizing the impregnation chamber.

14. A wet-vacuum process according to claim 12.

15. A dry vacuum process according to claim 12.

**Patentansprüche**

1. Härtbare Silikon-Versiegelungszusammensetzung, umfassend ein erstes Silikon enthaltendes Material und ein zweites Silikon enthaltendes Material, welches mit dem ersten Silikon enthaltenden Material reagieren kann oder reagiert hat,
ausgewählt aus einer reaktiven Mischung des ersten und des zweiten Silikon enthaltenden Materials, wobei die reaktive Mischung eine Viskosität im Bereich von 0,001 - 0,1 Pa·s (1 - 100 centipoise) aufweist, wobei das erste Silikon enthaltende Material ein Silan ist, das mindestens zwei SiH-Funktionalitäten umfasst und ein Molekulargewicht größer als 0 und weniger als 2000 hat, und das zweite Silikon enthaltende Material mindestens zwei ethylenisch-ungesättigte Funktionalitäten umfasst und ein Molekulargewicht größer als 0 und weniger als 2000 hat, mit einem Verhältnis von SiH zu Si-ethylenisch-ungesättigten Funktionalitäten von 0,8 - 1,2, und wobei die reaktive Mischung in der Zusammensetzung mit einem Platinkatalysator anwesend ist, der zum Katalysieren der Umsetzung des ersten und des zweiten Silikon enthaltenden Materials miteinander wirksam ist, und
wobei die Viskosität bei Raumtemperatur (25°C) mit einem Brookfield-Viskosimeter gemessen wird und die Molekulargewichte bei Raumtemperatur (25°C) durch Gelpermeationschromatographie gemessen werden.

2. Härtbare Silikon-Versiegelungszusammensetzung gemäß Anspruch 1, welche eine wärmehärtbare Zusammensetzung ist.

3. Verfahren zum Imprägnieren der Porosität eines porösen Gegenstandes, umfassend:

(A) in Kontakt bringen der Porosität des porösen Gegenstandes mit der härtbaren Silikon-Versiegelungszusammensetzung von Anspruch 1 unter Druckbedingungen, die das Eindringen der Silikon-Versiegelungszusammensetzung in die Porosität vermitteln.

4. Härtbare Silikon-Versiegelungszusammensetzung gemäß Anspruch 1, wobei das erste Silikon enthaltende Material Tetrakis(dimethylsilyl)silan ist.

5. Härtbare Silikon-Versiegelungszusammensetzung gemäß Anspruch 1, wobei das zweite Silikon enthaltende Material ausgewählt ist aus der Gruppe, bestehend aus Polyorgansiloxan, enthaltend ethylenisch-ungesättigte Funktionalitäten, und monomeren Silanen, enthaltend ethylenisch-ungesättigte Funktionalitäten.

6. Härtbare Silikon-Versiegelungszusammensetzung gemäß Anspruch 1, wobei das zweite Silikon enthaltende Material ein vinylterminiertes Polydimethylsiloxan ist.

7. Härtbare Silikon-Versiegelungszusammensetzung gemäß Anspruch 1, wobei das zweite Silikon enthaltende Material Tetramethyltetravinylcyclotetrasilan ist.

8. Härtbare Silikon-Versiegelungszusammensetzung gemäß Anspruch 1, wobei das zweite Silikon enthaltende Material Tetrakis(vinyldimethylsilyl)silan ist.

9. Härtbare Silikon-Versiegelungszusammensetzung gemäß Anspruch 1, welche im Wesentlichen aus dem Platinkatalysator und dem ersten und dem zweiten Silikon enthaltenden Material besteht.

10. Die härtbare Silikon-Versiegelungszusammensetzung von Anspruch 1, in der Porosität eines porösen Gegenstands gehärtet, um die Porosität imprägnierend zu versiegeln.

11. Poröser Gegenstand, dessen Porosität mit einer härtbaren Silikon-Versiegelungszusammensetzung gemäß Anspruch 1 versiegelt ist, welche imprägniert und in der Porosität gehärtet wurde.

12. Imprägnierungsverfahren zur Versiegelung der Porosität eines porösen Gegenstands, umfassend die Schritte: Platzieren des Gegenstands in einer Imprägnierungskammer; Anlegen eines Vakuums an die Imprägnierungskammer, um die Porosität des porösen Gegenstands darin zu evakuieren; in Kontakt bringen des porösen Gegenstandes mit der härtbaren Silikon-Versiegelungszusammensetzung von Anspruch 1 bei einem Druck höher als Vakuum, um die Silikon-Versiegelungszusammensetzung in die Porosität des porösen Gegenstands eindringen zu lassen.

13. Verfahren nach Anspruch 12, wobei das Eindringen durch unter Druck setzen der Imprägnierungskammer unterstützt wird.

14. Nass-Vakuumverfahren gemäß Anspruch 12.

15. Trocken-Vakuumverfahren gemäß Anspruch 12.

## Revendications

1. Composition de matériau d'étanchéité de type silicone durcissable, comprenant un premier matériau contenant du silicium, et un second matériau contenant du silicium réactif ou ayant réagi avec le premier matériau contenant du silicium,

choisie dans un mélange réactif des premier et second matériaux contenant du silicium, ledit mélange réactif ayant une viscosité dans la gamme de 0,001 à 0,1 Pa.s (1 à 100 cP), dans lequel le premier matériau contenant du silicium est un silane qui inclut au moins deux fonctionnalités SiH et a un poids moléculaire supérieur à zéro et inférieur à 2000, et le second matériau contenant du silicium inclut au moins deux fonctionnalités éthyléniquement insaturées et a un poids moléculaire supérieur à zéro et inférieur à 2000, avec un rapport des fonctionnalités SiH à Si-éthyléniquement insaturées de 0,8 à 1,2, et ledit mélange réactif est présent dans ladite composition avec un catalyseur au platine efficace pour catalyser la réaction des premier et second matériaux contenant du silicium entre eux, et

dans laquelle la viscosité est mesurée à température ambiante (25 °C) par un viscomètre Brookfield, et les poids moléculaires sont mesurés à température ambiante (25 °C) par chromatographie par perméation de gel.

**2.** Composition de matériau d'étanchéité de type silicone durcissable selon la revendication 1, qui est une composition durcissable à la chaleur.

**3.** Procédé d'imprégnation de la porosité d'un article poreux, comprenant :

(A) la mise en contact des pores de l'article poreux avec la composition de matériau d'étanchéité de type silicone durcissable de la revendication 1 dans des conditions sous pression permettant la pénétration de la composition de matériau d'étanchéité à la silicone dans les pores.

**4.** Composition de matériau d'étanchéité de type silicone durcissable selon la revendication 1, dans laquelle le premier matériau contenant du silicium est le tétrakis(diméthylsilyl)silane.

**5.** Composition de matériau d'étanchéité de type silicone durcissable selon la revendication 1, dans laquelle le second matériau contenant du silicium est choisi dans le groupe constitué par un polyorganosiloxane contenant des fonctionnalités éthyléniquement insaturées et les silanes monomères contenant des fonctionnalités éthyléniquement insaturées.

**6.** Composition de matériau d'étanchéité de type silicone durcissable selon la revendication 1, dans laquelle le second matériau contenant du silicium est un polydiméthylsiloxane à extrémité vinyle.

**7.** Composition de matériau d'étanchéité de type silicone durcissable selon la revendication 1, dans laquelle le second matériau contenant du silicium est le tétraméthyltétravinylcyclotétrasilane.

**8.** Composition de matériau d'étanchéité de type silicone durcissable selon la revendication 1, dans laquelle le second matériau contenant du silicium est le tétrakis(vinyldiméthylsilyl)silane.

**9.** Composition de matériau d'étanchéité de type silicone durcissable selon la revendication 1, qui consiste essentiellement en le catalyseur au platine et les premier et second matériaux contenant du silicium.

**10.** Composition de matériau d'étanchéité de type silicone durcissable selon la revendication 1, durcie dans les pores d'un article poreux pour colmater lesdits pores par imprégnation.

**11.** Article poreux dont les pores sont colmatés avec une composition de matériau d'étanchéité de type silicone durcissable selon la revendication 1, qui a été imprégnée et durcie dans lesdits pores.

**12.** Procédé d'imprégnation pour colmater les pores d'un article poreux, comprenant les étapes consistant :

à placer l'article dans une enceinte d'imprégnation ;
à appliquer un vide à l'enceinte d'imprégnation pour faire le vide dans les pores de l'article poreux placés dans celle-ci ;
à mettre en contact l'article poreux à une pression supérieure au vide avec la composition de matériau d'étanchéité de type silicone durcissable de la revendication 1 pour faire pénétrer ladite composition de matériau d'étanchéité à la silicone dans les pores de l'article poreux.

**13.** Procédé selon la revendication 12, dans lequel ladite pénétration est assistée par la mise sous pression de l'enceinte d'imprégnation.

**14.** Procédé sous vide par voie mouillee selon la revendication 12.

**15.** Procédé sous vide par voie séche selon la revendication 12.

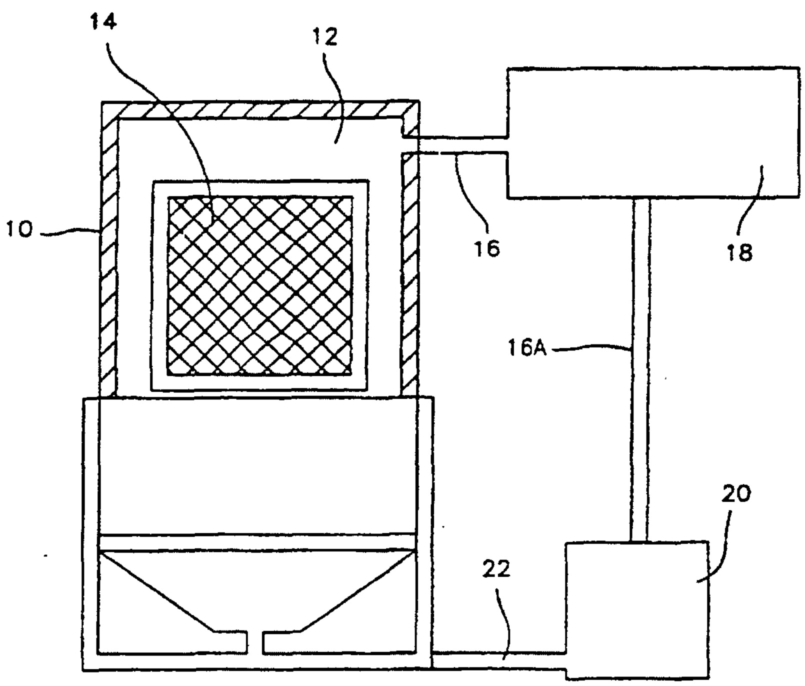


Fig. 1

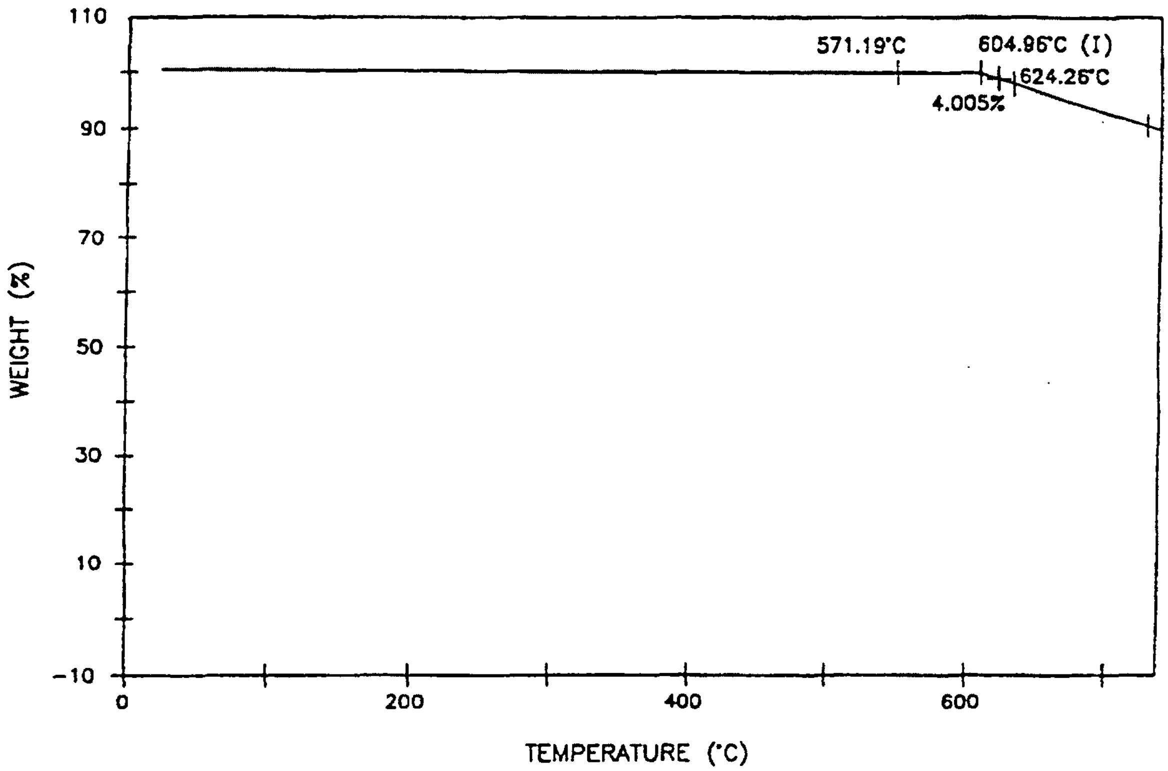
110
90
70
50
30
10
−10
WEIGHT (%)
0
200
400
600
TEMPERATURE (°C)
571.19°C
604.96°C (I)
624.26°C
4.005%

Fig. 2

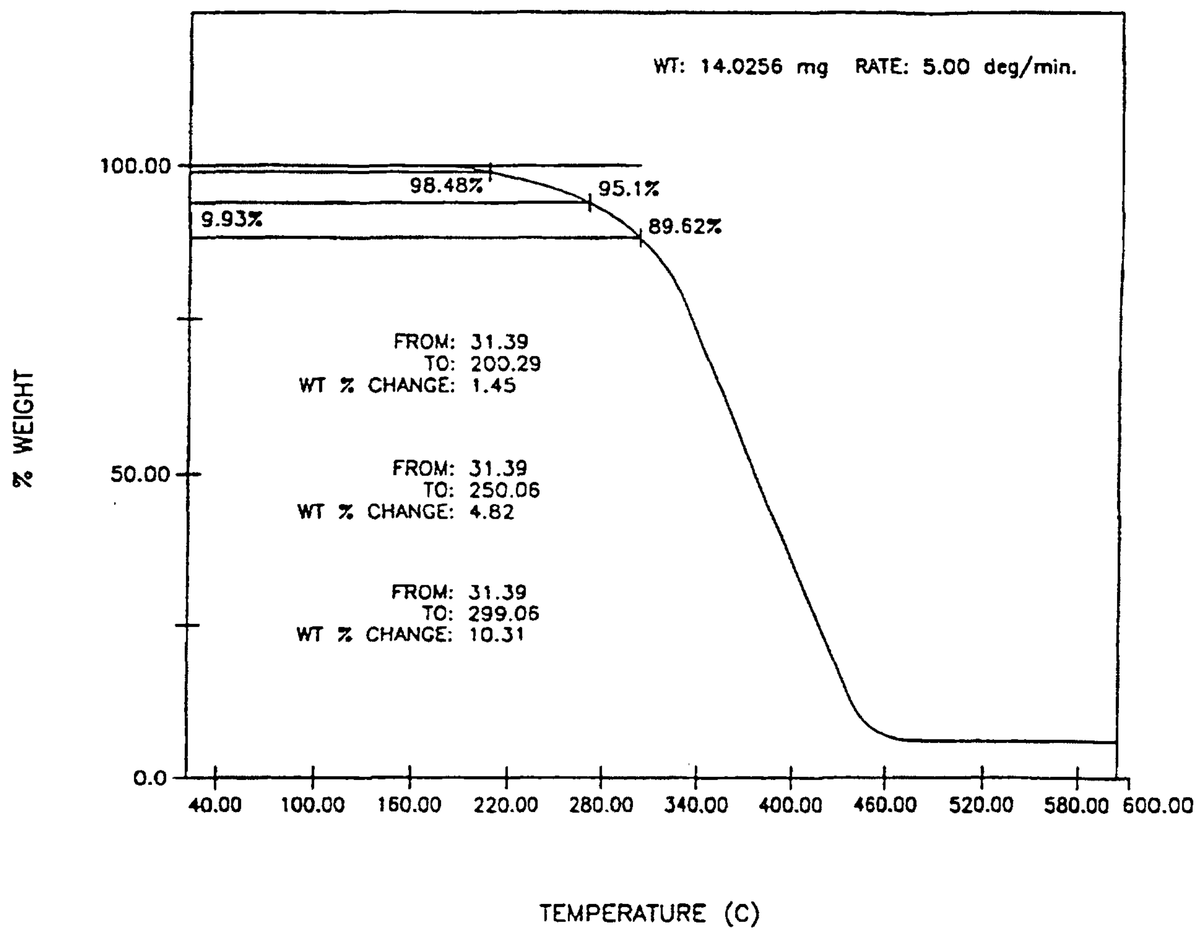
WT: 14.0256 mg RATE: 5.00 deg/min.
100.00
50.00
0.0
% WEIGHT
98.48%
95.1%
9.93%
89.62%
FROM: 31.39
TO: 200.29
WT % CHANGE: 1.45
FROM: 31.39
TO: 250.06
WT % CHANGE: 4.82
FROM: 31.39
TO: 299.06
WT % CHANGE: 10.31
40.00 100.00 160.00 220.00 280.00 340.00 400.00 460.00 520.00 580.00 600.00
TEMPERATURE (C)

Fig. 3

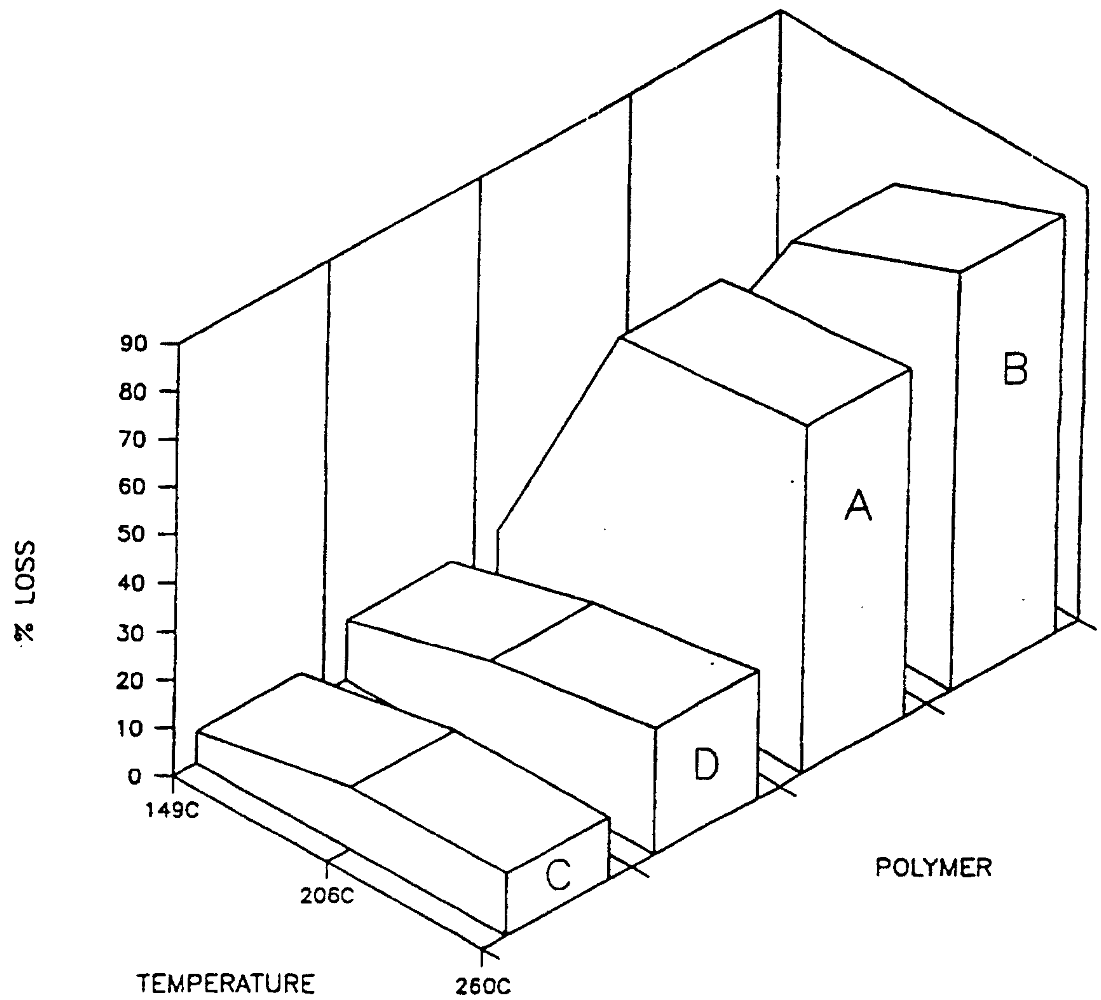

90
80
70
60
50
40
30
20
10
0
% LOSS
149C
206C
260C
TEMPERATURE
POLYMER
A
B
C
D


Fig. 4